# EUROPEAN PATENT SPECIFICATION

(11) **EP 2 743 319 B1**
(45) Date of publication and mention of the grant of the patent: **22.07.2015**
(21) Application number: 13196137.7
(22) Date of filing: 09.12.2013
(51) Int. Cl.: C09D 133/02, C09J 5/08

(54) **Pressure-sensitive adhesive composition and pressure-sensitive adhesive sheet**
Druckempfindliche Haftzusammensetzung und druckempfindliche Klebefolie
Composition adhésive sensible à la pression et feuille adhésive sensible à la pression

(30) Priority: 11.12.2012 JP 2012270454
(43) Date of publication of application: 18.06.2014
(73) Proprietor: NITTO DENKO CORPORATION, Ibaraki-shi, Osaka 567-8680 (JP)
(72) Inventor: Tsubaki, Hiroyuki, Ibaraki-shi, Osaka 567-8680 (JP); Inokuchi, Shinji, Ibaraki-shi, Osaka 567-8680 (JP); Hirose, Tetsuya, Ibaraki-shi, Osaka 567-8680 (JP); Kabutoya, Ryuuichi, Ibaraki-shi, Osaka 567-8680 (JP)
(74) Representative: Grünecker Patent- und Rechtsanwälte PartG mbB

(56) References cited:
- EP-A1- 2 452 990
- EP-A1- 2 639 259
- JP-A- 2010 254 902

## Description

The present invention relates to a pressure-sensitive adhesive composition and a pressure-sensitive adhesive sheet.

Until now, pressure-sensitive adhesive sheets comprising a pressure-sensitive adhesive layer that has a bubble structure are known. Such pressure-sensitive adhesive sheets are often used in adhering adherends to curved surfaces or concave-convex surfaces and in applications in which resistance to resilience is said to be required. In a pressure-sensitive adhesive layer including bubbles in a publicly-known pressure-sensitive adhesive sheet, a fluorochemical surfactant is used as an auxiliary agent in mixing bubbles.

### [Patent Document]

[Patent Document 1] Japanese Patent Application Publication No. 1995-48549

EP-A-2452990 discloses a pressure-sensitive adhesive tape or sheet comprising a viscoelastic layer containing bubbles and/or fine particles, and a pressure-sensitive adhesive layer formed on at least one side of the viscoelastic layer. The viscoelastic layer may be a pressure-sensitive adhesive layer containing bubbles. The viscoelastic layer may contain additives such as fluorine-type surfactants.

EP-A-2639259 discloses a resin composition layer comprising an acrylic polymer containing an alkyl (meth) acrylate as a monomer main component, thermally conductive particles, and bubbles. The bubble-containing thermally conductive resin composition layer may be a pressure-sensitive adhesive layer. The bubble-containing thermally conductive resin composition may further contain a fluorine-based surfactant.

In a pressure-sensitive adhesive sheet including a pressure-sensitive adhesive layer that has a bubble structure, bubbles lie continuously in the thickness direction of the pressure-sensitive adhesive layer as the thickness thereof becomes small, and hence a so-called pinhole is likely to be caused. There is the problem that, if such a pinhole is caused in the pressure-sensitive adhesive layer, the appearance of the pressure-sensitive adhesive sheet is impaired. There is a strong need for reducing pinholes, in particular, in applications in which pressure-sensitive adhesive tapes having a small width, such as a pressure-sensitive adhesive tape for weather strip, are used.

The present invention has been made in view of these situations, and a purpose of the invention is to provide a technique in which occurrence of a pinhole can be suppressed in a pressure-sensitive adhesive sheet comprising a pressure-sensitive adhesive layer that has a bubble structure.

The present invention provides:
(1) A pressure-sensitive adhesive composition comprising:
   a pressure-sensitive adhesive composite;
   a bubble; and
   a surfactant including a polymer that has a cyclic structure and a fluorinated hydrocarbon group in its molecule.
(2) The pressure-sensitive adhesive composition according to item (1), wherein the polymer contains, as a copolymerization component, one or more selected from the group consisting of ethylene glycol and propylene glycol.
(3) The pressure-sensitive adhesive composition according to item (1) or (2), wherein a weight average molecular weight of the polymer is 20000 or more.
(4) The pressure-sensitive adhesive composition according to any one of items (1) to (3), wherein a content of the surfactant is 0.01 to 2 parts by mass based on 100 parts by mass of a base polymer in the pressure-sensitive adhesive composition.
(5) The pressure-sensitive adhesive composition according to any one of items (1) to (4) comprising, as the pressure-sensitive adhesive composite, an acrylic polymer whose monomer major component is a (meth)acrylic acid ester.
(6) The pressure-sensitive adhesive composition according to any one of items (1) to (5) further comprising a hollow microsphere.
(7) The pressure-sensitive adhesive composition according to item (6), wherein the hollow microsphere is a hollow glass balloon.
(8) The pressure-sensitive adhesive composition according to any one of items (1) to (7) that can be cured by an activated energy beam.
(9) A pressure-sensitive adhesive sheet having a pressure-sensitive adhesive layer formed by the pressure-sensitive adhesive composition according to any one of items (1) to (8).

A pressure-sensitive adhesive composition or sheet in which the respective components described above are appropriately combined can be encompassed within the scope of the invention for which protection is sought by this application.

Embodiments will now be described, by way of example only, with reference to the accompanying drawing, which is meant to be exemplary, not limiting, in which:

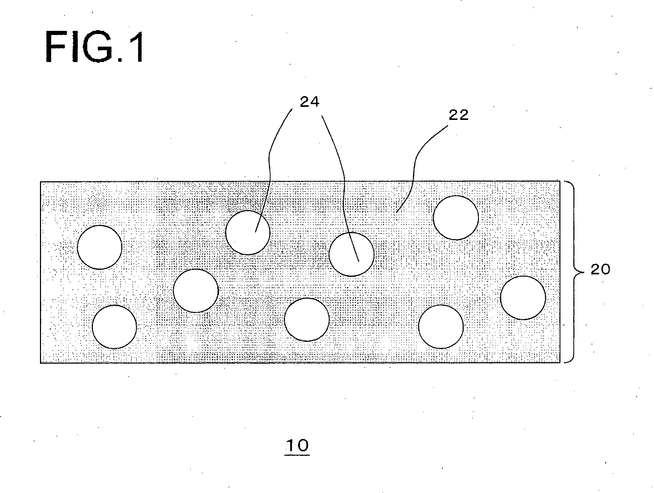

Fig. 1 is a view illustrating part of the section of a pressure-sensitive adhesive sheet according to an embodiment.

The invention will now be described by reference to the preferred embodiments. This does not intend to limit the scope of the present invention, but to exemplify the invention.

Fig. 1 is a view illustrating part of the section of a pressure-sensitive adhesive sheet according to an embodiment. As illustrated therein, a pressure-sensitive adhesive sheet 10 comprises a pressure-sensitive adhesive layer 20 as a pressure-sensitive adhesive. The pressure-sensitive adhesive layer 20 is formed by a pressure-sensitive adhesive composition including a pressure-sensitive adhesive composite 22, a bubble 24, and a surfactant (not illustrated). In the present specification, the concept of the "pressure-sensitive adhesive sheet 10" can involve objects referred to as a pressure-sensitive adhesive tape, pressure-sensitive adhesive label, and pressure-sensitive adhesive film, etc.

### [Pressure-Sensitive Adhesive Layer]

### (Base Polymer)

The pressure-sensitive adhesive composite 22 included in the pressure-sensitive adhesive layer 20 comprises a base polymer. The base polymer is not particularly limited. The base polymer can be appropriately selected from the base polymers (pressure-sensitive adhesive components) in, for example, publicly-known pressure-sensitive adhesives (e.g., an acrylic pressure-sensitive adhesive, rubber pressure-sensitive adhesive, vinyl alkyl ether pressure-sensitive adhesive, silicone pressure-sensitive adhesive, polyester pressure-sensitive adhesive, polyamide pressure-sensitive adhesive, urethane pressure-sensitive adhesive, fluorine pressure-sensitive adhesive, and epoxy pressure-sensitive adhesive, etc.) That is, the pressure-sensitive adhesive composite 22 may be one in which a publicly-known pressure-sensitive adhesive, such as an acrylic pressure-sensitive adhesive, rubber pressure-sensitive adhesive, vinyl alkyl ether pressure-sensitive adhesive, silicone pressure-sensitive adhesive, polyester pressure-sensitive adhesive, polyamide pressure-sensitive adhesive, urethane pressure-sensitive adhesive, fluorine pressure-sensitive adhesive, epoxy pressure-sensitive adhesive, or the like, is used.

These base polymers can be used alone or in combination of two or more thereof. As the base polymer, the base polymer in a publicly-known acrylic pressure-sensitive adhesive can be used preferably. The acrylic pressure-sensitive adhesive usually includes, as a base polymer, an acrylic polymer [in particular, an acrylic polymer whose monomer major component is a (meth)acrylic acid ester]. In the acrylic polymer, (meth) acrylic acid esters may be used alone or in combination of two or more thereof. As such a (meth)acrylic acid ester, a (meth) acrylic acid alkyl ester can be used preferably. Examples of the (meth)acrylic acid alkyl ester in the acrylic polymer include, for example: (meth)acrylic acid C1-C20 alkyl esters [preferably (meth)acrylic acid C2-C14 alkyl esters, and more preferably (meth)acrylic acid C2-C10 alkyl esters], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth) acrylic acid octadecyl, (meth) acrylic acid nonadecyl, and (meth)acrylic acid eicosyl.

Examples of the (meth)acrylic acid esters other than the (meth)acrylic acid alkyl esters include, for example:
(meth) acrylic acid alkyl esters having an alicyclic hydrocarbon group, such as cyclopentyl(meth)acrylate,
cyclohexyl(meth)acrylate, and isobornyl(meth)acrylate; and
(meth) acrylic acid esters having an aromatic hydrocarbon group, such as phenyl(meth)acrylate.

Because the (meth)acrylic acid ester is used as a monomer major component of the acrylic polymer, it is important that the rate of the (meth)acrylic acid ester [in particular, (meth) acrylic acid alkyl ester] is, for example, 60% by mass or more (preferably 80% by mass or more) based on the total mass of the monomer components for preparing the acrylic polymer.

The acrylic polymer may contain, as a monomer component, various copolymerizable monomers, such as a polar group-containing monomer and polyfunctional monomer. By using a copolymerizable monomer as a monomer component, for example, the adhesive force to an adherend can be improved, or the cohesive force of the pressure-sensitive adhesive can be enhanced. The polymerizable monomers can be used alone or in combination of two or more thereof.

Examples of the polar group-containing monomer include, for example: carboxyl group-containing monomers, such as (meth)acrylic acid, itaconic acid, maleic acid, fumaric acid, crotonic acid, and isocrotonic acid, or anhydrides thereof (maleic anhydride, etc.); hydroxyl group-containing monomers, such as (meth) acrylic acid hydroxyalkyls including (meth) acrylic acid hydroxyethyl, (meth)acrylic acid hydroxypropyl, and (meth)acrylic acid hydroxybutyl, etc.; amido group-containing monomer, such as acrylamide, methacrylamide, N,N-dimethyl(meth)acrylamide, N-methylol(meth)acrylamide, N-methoxymethyl(meth)acrylamide, and N-butoxymethyl(meth)acrylamide; amino group-containing monomers, such as (meth)acrylic acid aminoethyl, (meth)acrylic acid dimethylaminoethyl, and (meth)acrylic acid t-butylaminoethyl; glycidyl group-containing monomers, such as (meth)acrylic acid glycidyl and (meth)acrylic acid methylglycidyl; cyano group-containing monomers, such as acrylonitrile and methacrylonitrile; and hetero ring-containing vinyl monomers, such as N-vinyl-2-pyrrolidone, (meth)acryloyl morpholine, N-vinylpyridine, N-vinylpiperidone, N-vinylpyrimidine, N-vinylpiperazine, N-vinylpyrazine, N-vinylpyrrole, N-vinylimidazole, and N-vinyloxazole. Carboxyl group-containing monomers, such as acrylic acid, or anhydrides thereof can be preferably used as the polar group-containing monomer.

The use amount of the polar group-containing monomer is 30% by mass or less (e.g., 1 to 30% by mass), and preferably 3 to 20% by mass, based on the total mass of the monomer components for preparing the acrylic polymer. If the use amount of the polar group-containing monomer is more than 30% by mass based on the total mass of the monomer components for preparing the acrylic polymer, for example, the cohesive force of the acrylic pressure-sensitive adhesive may become too large, and hence there is the fear that the pressure-sensitive adhesiveness may be decreased. If the use amount of the polar group-containing monomer is too small (e.g., it is less than 1% by mass based on the total mass of the monomer components for preparing the acrylic polymer), for example, the cohesive force of the acrylic pressure-sensitive adhesive may be decreased, and hence high shearing force cannot be obtained.

Examples of the polyfunctional monomer include, for example, hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butanediol di(meth)acrylate, and hexanediol di(meth)acrylate, etc.

The use amount of the polyfunctional monomer is 2% by mass or less (e.g., 0.01 to 2% by mass), and preferably 0.02 to 1% by mass, based on the total mass of the monomer components for preparing the acrylic polymer. If the use amount of the polyfunctional monomer is more than 2% by mass based on the total mass of the monomer components for preparing the acrylic polymer, for example, the cohesive force of the acrylic pressure-sensitive adhesive may become too large, and hence there is the fear that the pressure-sensitive adhesiveness may be decreased. If the use amount of the polyfunctional monomer is too small (e.g., it is less than 0.01% by mass based on the total mass of the monomer components for preparing the acrylic polymer), for example, the cohesive force of the acrylic pressure-sensitive adhesive may be decreased.

Examples of the copolymerizable monomers other than the polar group-containing monomers and the polyfunctional monomers includes, for example: vinyl esters, such as vinyl acetate and vinyl propionate; aromatic vinyl compounds, such as styrene and vinyl toluene; olefins or dienes, such as ethylene, butadiene, isoprene and isobutylene; vinyl ethers, such as vinyl alkyl ether; vinyl chloride; (meth)acrylic acid alkoxy alkyl monomers, such as (meth)acrylic acid methoxyethyl and (meth)acrylic acid ethoxyethyl; sulfonate group-containing monomers, such as vinyl sulfonate sodium; phosphate group-containing monomers, such as 2-hydroxyethyl acryloyl phosphate; imide group-containing monomers, such as cyclohexyl maleimide and isopropyl maleimide; isocyanate group-containing monomers, such as 2-methacryloyloxyethyl isocyanate; fluorine atom-containing (meth)acrylates; and silicon atom-containing (meth)acrylates, etc.

### [Polymerization Initiator]

In preparing the acrylic polymer as the base polymer, a curing reaction by heat and activated energy beams using a polymerization initiator, such as a thermal polymerization initiator or a photo-polymerization initiator (photoinitiator), can be used. That is, the pressure-sensitive adhesive composite 22 may include a polymerization initiator, such as a thermal polymerization initiator, photo-polymerization initiator, or the like. Accordingly, the pressure-sensitive adhesive composite 22 can be cured by heat or an energy beam. When a polymerization initiator (thermal polymerization initiator, photo-polymerization initiator, or the like) is included, curing becomes possible by heat or an activated energy beam in this way. Accordingly, the pressure-sensitive adhesive layer 20, having a structure in which bubbles are stably included, can be easily formed by curing the layer 20 in a state where the bubbles are mixed to form the layer 20.

As such a polymerization initiator, a photo-polymerization initiator can be preferably used from the advantage that a polymerization time can be shortened, etc. That is, it is preferable to form the pressure-sensitive adhesive layer 20 having a stable bubble structure by using the polymerization with the use of activated energy beams. The photo-polymerization initiators may be used alone or in combination of two or more thereof.

The photo-polymerization initiator is not particularly limited, and, for example, a benzoin ether photo-polymerization initiator, acetophenone photo-polymerization initiator, α-ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, or the like can be used.

Specific examples of the benzoin ether photo-polymerization initiator include, for example, benzoin methyl ether, benzoin ethyl ether, benzoin propyl ether, benzoin isopropyl ether, benzoin isobutyl ether, 2,2-dimethoxy-1,2-diphenylethane-1-one, and anisoin methyl ether, etc. Specific examples of the acetophenone photo-polymerization initiator include, for example, 2,2-diethoxyacetophenone, 2,2-dimethoxy-2-phenylacetophenone, 1-hydroxycyclohexyl phenyl ketone, 4-phenoxy dichloroacetophenone, 4-t-butyl-dichloroacetophenone, etc. Specific examples of α-ketol photo-polymerization initiator include, for example, 2-methyl-2-hydroxy propiophenone and 1-[4-(2-hydroxyethyl)-phenyl]-2-hydroxy-2-methylpropane-1-one, etc. Specific examples of the aromatic sulfonyl chloride photo-polymerization initiator include, for example, 2-naphthalene sulfonyl chloride, etc. Specific examples of the photoactive oxime photo-polymerization initiator include, for example, 1-phenyl-1,2-propanedione-2-(O-ethbxycarbonyl)-oxime, etc.

Specific examples of the benzoin photo-polymerization initiator include, for example, benzoin, etc. Specific examples of the benzyl photo-polymerization initiator include, for example, benzyl, etc. Specific examples of the benzophenone photo-polymerization initiators include, for example, benzophenone, benzoylbenzoic acid, 3,3'-dimethyl-4-methoxybenzophenone, polyvinyl benzophenone, and α-hydroxy cyclohexyl phenyl ketone, etc. Specific examples of the ketal photo-polymerization initiator include, for example, benzyl dimethyl ketal, etc. Specific examples of the thioxanthone photo-polymerization initiato include, for example, thioxanthone, 2-chlorothioxanthone, 2-methyl thioxanthone, 2,4-dimethyl thioxanthone, isopropyl thioxanthone, 2,4-dichloro thioxanthone, 2,4-diethyl thioxanthone, 2,4-diisopropyl thioxanthone, and dodecyl thioxanthone, etc.

The use amount of the photo-polymerization initiator is not particularly limited, but it can be selected, for example, from a range of 0.01 to 5 parts by mass (preferably 0.05 to 3 parts by mass) based on 100 parts by mass of the whole monomer components for forming the base polymer in the pressure-sensitive adhesive composition [in particular, the whole monomer components for forming the acrylic polymer whose monomer major component is a (meth)acrylic acid ester].

In activating the photo-polymerization initiator, it is important to radiate activated energy beams onto the pressure-sensitive adhesive composition. Examples of the activated energy beam include, for example, ionizing radiations, such as an α ray, β ray, γ ray, neutron ray, and electron ray, and an ultraviolet ray, etc. Among them, an ultraviolet ray is particularly preferred. The radiation energy and radiation time of the activated energy beam are not particularly limited, but are only required to activate the photo-polymerization initiator to generate reactions among the monomer components.

Examples of the thermal polymerization initiator include, for example: azo polymerization initiators [e.g., 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis(2-amidinopropane)dihydrochloride, 2,2'-azobis[2-(5-methyl-2-imidazoline-2-yl) propane]dihydrochloride, 2,2'-azobis(2-methylpropionamidine)disulfate, and 2,2'-azobis (N,N'-dimethyleneisobutylamidine)dihydrochloride, etc.); peroxide polymerization initiators (e.g., dibenzoyl peroxide, t-butyl permaleate, etc.); and redox polymerization initiators, etc. The use amount of the thermal polymerization initiator is not particularly limited, but only has to be within a conventional range in which it can be used as a thermal polymerization initiator.

### (Bubble)

The pressure-sensitive adhesive layer 20 includes the bubbles 24. The amount of the bubbles 24 that can be mixed therein is not particularly limited, but is appropriately selected in accordance with the use application of the pressure-sensitive adhesive composition, etc. In the present embodiment, it is sufficient that the bubbles 24 are included in an amount of 5 to 40% by volume, and preferably 8 to 30% by volume, based on the whole volume of the pressure-sensitive adhesive layer 20.

It is desirable that the bubble 24 to be mixed in the pressure-sensitive adhesive layer 20 is basically a bubble of a closed cell type; however, a bubble of a closed cell type and that of an open cell type may coexist.

The bubble 24 usually has a spherical shape (in particular, a true spherical shape), but may have a distorted spherical shape. The average bubble size (diameter) of the bubbles 24 is not particularly limited, but is selected, for example, from a range of 1 to 1000 micrometer (preferably 10 to 500 micrometer, and more preferably 30 to 300 micrometer).

A gas component contained in the bubble (a gas component that forms the bubble; sometimes referred to as a "bubble-forming gas") is not particularly limited, but various gas components, such as nitrogen, carbon dioxide, inert gases including argon, etc., and air, are used. When a reaction, such as a polymerization reaction, is performed after a bubble-forming gas is mixed with the pressure-sensitive adhesive composite 22, a gas that does not hamper the reaction is preferred as the bubble-forming gas. Nitrogen is preferred as the bubble-forming gas from both the viewpoints of not hampering the reaction and cost.

### (Surfactant)

The pressure-sensitive adhesive layer 20 includes a surfactant as an additive. The surfactant includes a polymer that has a cyclic structure and a fluorinated hydrocarbon group in its molecule.

The polymer having a cyclic structure and a fluorinated hydrocarbon group in its molecule may be formed from a monomer composition containing both a fluorine monomer and a non-fluorine ethylenically polymerizable monomer that is copolymerizable with the fluorine monomer and whose homopolymer, when formed, has a glass transition temperature of 60°C or higher. The fluorine monomers may be used alone or in combination of two or more thereof.

It can be considered that, because the speed at which the non-fluorine ethylenically polymerizable monomer in the surfactant is adsorbed to the gas-liquid interface between the bubble and the pressure-sensitive adhesive composition is large, the bubble is made to be fine, thereby suppressing occurrence of a pinhole.

In the present specification, "the glass transition temperature (Tg) of a homopolymer, when formed" means "the glass transition temperature (Tg) of a homopolymer formed from the monomer", and the following values are specifically adopted.

**[Table 1]**

| | Tg(°C) |
|---|---|
| STYRENE | 80 |
| DICYCLOPENTANYL ACRYLATE | 120 |
| DICYCLOPENTANYL METHACRYLATE | 175 |
| ISOBORNYL ACRYLATE | 97 |
| ISOBORNYL METHACRYLATE | 173 |
| CYCLOHEXYL METHACRYLATE | 66 |
| 1-ADAMANTYL ACRYLATE | 250 |
| 1-ADAMANTYL METHACRYLATE | 153 |

The numerical values described in "Polymer Handbook" (Third Edition, John Wiley & Sons, Inc, 1989) are adopted as the glass transition temperatures of the monomers that are not listed in Table 1. When multiple values are described with respect to a monomer in the document, the largest value is adopted. A value obtained by the following measurement method is adopted as the glass transition temperature of a homopolymer formed from a monomer that is not described even in the document. That is, into a reactor provided with a thermometer, a stirrer, a nitrogen inlet pipe, and a reflux cooling pipe, 100 parts by mass of a monomer X, 0.2 parts by mass of 2,2'-azobisisobutyronitrile, and 200 parts by mass of ethyl acetate, as a polymerization solvent, are placed; and the mixture is stirred for 1 hour while a nitrogen gas is being introduced. After the oxygen in the polymerization system is removed in this way, the mixture is heated to 63°C to react with each other for 10 hours. Subsequently, the mixture is cooled to room temperature to obtain a homopolymer solution having a solid concentration of 33% by mass. Subsequently, this homopolymer solution is made to flow on a release liner to be coated thereon, and the solution is then dried to make a test sample (sheet-shaped homopolymer) having a thickness of approximately 2 mm. Subsequently, 1 to 2 mg of this test sample is weighed and put in an aluminum open cell, so that Reversing Heat Flow (specific heat component) behaviors of the homopolymer are obtained by using a temperature-modulated DSC (product name: "Q-2000" made by TA Instruments Inc.) at a heating rate of 5°C/min under 50 ml/min of a nitrogen flow rate atmosphere. With reference to JIS-K-7121, the temperature at the point where a straight line, located at the same distance in the vertical axis direction from a straight line obtained by extending the base line on the low-temperature side of the obtained Reversing Heat Flow and from a straight line obtained by extending the base line on the high-temperature side thereof, and a curved line, located at the portion where the glass transition temperature is changed in a stepwise shape, intersect with each other is determined to be the glass transition temperature (Tg) of the homopolymer.

The weight average molecular weight of the polymer that forms the surfactant is not particularly limited, as far as it is 200 or more, but it can be selected from 200 to 100000, preferably 1000 to 80000, more preferably 10000 to 60000, and still more preferably 20000 to 50000. If the weight average molecular weight of the polymer in the surfactant is less than 20000, the mixability of bubbles or the stability of the mixed bubbles is decreased, and hence the amount of the bubbles that can be mixed is decreased. Even if bubbles are mixed, they are likely to be united with each other between the mixing of the bubbles and the formation of the pressure-sensitive adhesive layer 20 including the bubble 24 that is formed by the pressure-sensitive adhesive composition. As a result, the amount of the bubbles in the pressure-sensitive adhesive layer 20 is decreased, and a bubble (hole) that may penetrate the pressure-sensitive adhesive layer 20, in other words, a pinhole is likely to be formed.

The polymers may be used alone or in combination of two or more thereof.

As described above, the polymer contains, as monomer components, both a monomer having a fluorine atom-containing group, i.e., a fluorine monomer, and a monomer not having a fluorine atom-containing group, i.e., a non-fluorine ethylenically polymerizable monomer. The fluorine monomers and the non-fluorine ethylenically polymerizable monomers may be used alone or in combination of two or more thereof, respectively.

The glass transition temperature of a homopolymer formed from the non-fluorine monomer is 60°C or higher. The glass transition temperature thereof is preferably 70°C or higher, and more preferably 80°C or higher. The upper limit of the glass transition temperature is not particularly limited, but is, for example, 300°C or lower, and preferably 200°C or lower.

As the fluorine monomer, for example, a vinyl monomer having a fluorine atom-containing group can be used preferably. In the vinyl monomer having a fluorine atom-containing group, the fluorine atom-containing group is preferably a perfluoro group that may be univalent or polyvalent of divalent or more. As the univalent fluorine atom-containing group (in particular, perfluoro group), for example, perfluoro alkyl groups (e.g., CF₃CF₂ group, CF₃CF₂CF₂ group, etc.) can be used preferably. The perfluoro alkyl group may be bonded to a vinyl monomer via another group (e.g. , -O- group, -OCO- group, alkylene group, or the like). Specifically, the univalent fluorine atom-containing group may have the form of: a perfluoro ether group (perfluoro alkyl-oxy group, or the like); a perfluoro ester group (perfluoro alkyl-oxycarbonyl group, perfluoro alkyl-carbonyloxy group, or the like); or the like. Examples of the perfluoro ether group include, for example, a CF₃CF₂O group and CF₃CF₂CF₂O group, etc. Examples of the perfluoro ester group include, for example, a CF₃CF₂OCO group, CF₃CF₂CF₂OCO group, CF₃CF₂COO group, and CF₃CF₂CF₂COO group, etc.

With respect to the fluorine atom-containing group of divalent or more, e.g., examples of divalent fluorine atom-containing group include perfluoro alkylene groups corresponding to the perfluoro alkyl groups, etc. (e.g., a tetrafluoroethylene group, hexafluoropropylene group, etc.) Similarly to the perfluoro alkyl group, the perfluoro alkylene group may be bonded to a main chain via another group (e.g., -O-group, -OCO-group, alkylene group, or the like). The perfluoro alkylene group may have, for example, the form of: a perfluoro alkylene-oxy group, such as a tetrafluoro ethylene-oxy group, hexafluoro propylene-oxy group, or the like; a perfluoro alkylene-oxy carbonyl group, such as a tetrafluoroethylene-oxycarbonyl group, hexafluoropropylene-oxycarbonyl group, or the like.

In fluorine atom-containing groups, such as the perfluoro groups (the perfluoroalkyl group and perfluoro alkylene group, etc.), the number of carbon atoms in the portion of the perfluoro group is not particularly limited, but is, for example, 1 or 2 or more (preferably 3 to 30, and more preferably 4 to 20). It is preferable that the fluorine monomer has a chain having a plurality of perfluoro alkyl groups. It is preferable that the number of the carbon atoms in the portion of the perfluoro group is 6 or less, from the viewpoint that PFOA (Perfluoroctanic acid, chemical structural formula: C₇F₁₅COOH), is not generated.

As the vinyl monomer having a fluorine atom-containing group, a (meth)acrylic acid ester having a fluorine atom-containing group is particularly preferred. As such a (meth) acrylic acid ester having a fluorine atom-containing group, for example, perfluoro alkyl(meth)acrylate is preferred. Examples of the perfluoro alkyl(meth)acrylate include, for example, perfluoro C1-20 alkyl(meth)acrylates, such as perfluoromethyl(meth)acrylate, perfluoroethyl(meth)acrylate, perfluoropropyl(meth)acrylate, perfluoroisopropyl(meth)acrylate, perfluorobutyl(meth)acrylate, perfluoroisobutyl(meth)acrylate, perfluoro-s-butyl(meth)acrylate, perfluoro-t-butyl(meth)acrylate, perfluoropentyl(meth)acrylate, perfluorohexyl(meth)acrylate, perfluoroheptyl(meth)acrylate, and perfluorooctyl(meth)acrylate, etc.

Specific examples of a structural unit derived from the fluorine monomer that forms the polymer is one derived from perfluoroalkyl ethyl acrylate represented by the following formula:

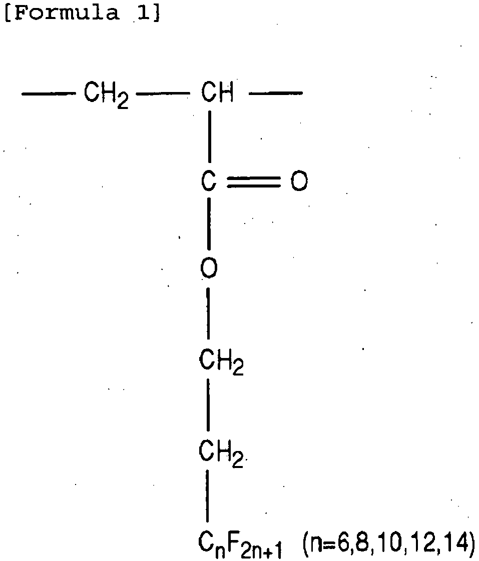

Subsequently, when the fluorine monomer is a vinyl monomer having a fluorine atom-containing group [in particular, a (meth) acrylic acid ester having a fluorine atom-containing group], (meth)acrylic acid esters can be used as the non-fluorine ethylenically polymerizable monomer, and among them, a (meth)acrylic acid alkyl ester is preferred. Examples of the (meth)acrylic acid alkyl ester include, for example, (meth) acrylic acid C1-20 alkyl esters [preferably (meth)acrylic acid C4-18 alkyl esters], etc., such as (meth) acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth) acrylic acid octadecyl, (meth) acrylic acid nonadecyl, and (meth)acrylic acid eicosyl, etc.

Examples of the (meth)acrylic acid esters other than the (meth)acrylic acid alkyl esters include, for example:
(meth) acrylic acids having an alicyclic hydrocarbon group, such as cyclopentyl(meth)acrylate, cyclohexyl(meth)acrylate, and isobornyl(meth)acrylate; and (meth)acrylic acids having an aromatic hydrocarbon group, such as phenyl(meth)acrylate.

Examples of the non-fluorine ethylenically polymerizable monomer include: aromatic vinyl compounds, such as styrene and vinyl toluene; amido group-containing monomers, such as N-vinyl pyrrolidone; amino group-containing monomers, such as (meth)acryloyl morpholine; and imide group-containing monomers, such as cyclohexyl maleimide. Further, as the non-fluorine ethylenically polymerizable monomer, a polyfunctional copolymerizable monomer (polyfunctional monomer), such as, for example, divinylbenzene, may be used. A monomer having an alicyclic structure is preferred.

Specific examples of a structural unit derived from the non-fluorine ethylenically polymerizable monomer that forms the polymer include: a structural unit derived from the dicyclopentanyl methacrylate represented by the following formula; 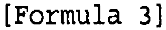 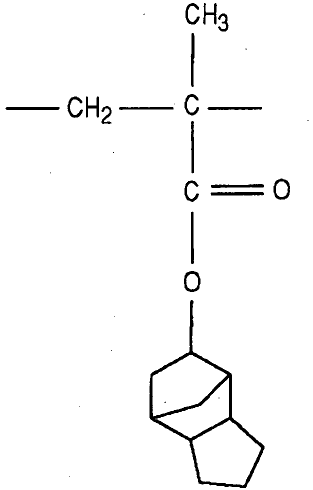 and a structural unit derived from the isobornyl methacrylate represented by the following formula.

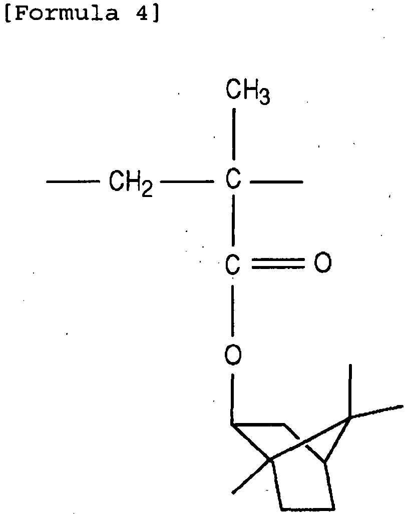

In the present embodiment, a surfactant, including a polymer whose monomer components are a vinyl monomer having a fluorine atom-containing group [in particular, a (meth)acrylic acid ester having a fluorine atom-containing group] and a (meth)acrylic acid ester [in particular, a (meth)acrylic acid alkyl ester], can be used preferably. In the polymer that forms such a surfactant, the rate of the vinyl monomer having a fluorine atom-containing group [in particular, a (meth) acrylic acid ester having a fluorine atom-containing group] is not particularly limited, but can be appropriately selected in accordance with the intended properties of the surfactant.

It is preferable that the polymer contains a polyethylene glycol skeleton in the non-fluorine ethylenically polymerizable monomer. As the non-fluorine ethylenically polymerizable monomer in this case, for example, the following monomeric units can be cited.

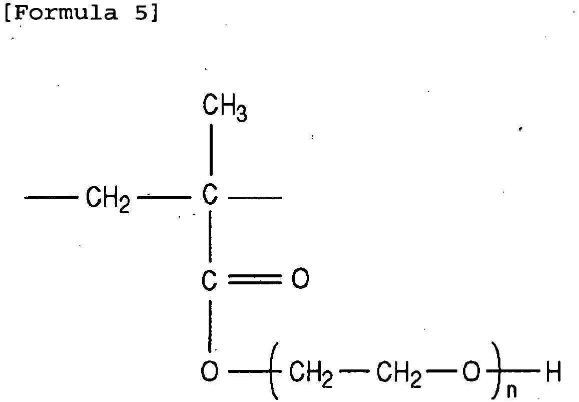

Some examples of the surfactant to be used in the present embodiment are cited below.
DIC Corporation, product name: F-562
ASAHI GLASS CO., LTD., product name: AG-E082, AG-E061
AGC SEIMI CHEMICAL CO, LTD., product name: "S-685"

The use amount (solid amount) of the surfactant is not particularly limited, but can be selected, for example, from 0.01 to 2 parts by mass, preferably 0.03 to 1.5 parts by mass, and more preferably 0.05 to 1 part by mass, based on 100 parts by mass of the whole monomer components for forming the base polymer in the pressure-sensitive adhesive composite [in particular, the whole monomer components for forming the acrylic polymer whose monomer major component is a (meth) acrylic acid ester]. If the use amount of the surfactant is less than 0.01 parts by mass based on 100 parts by mass of the base polymer in the pressure-sensitive adhesive composition, the mixability of the bubbles is decreased, and hence it becomes difficult to mix a sufficient amount of the bubbles 24 into the pressure-sensitive adhesive composition. On the other hand, if the use amount thereof is more than 2 parts by mass, the adhesiveness is decreased.

### (Hollow Microsphere)

The pressure-sensitive adhesive composition according to the present embodiment may further include a hollow microsphere. By using a hollow microsphere, for example, the shear adhesive force of the pressure-sensitive adhesive composition can be enhanced, and the processability can be improved. The hollow microspheres can be used alone or in combination of two or more thereof.

The diameter (average particle diameter) of the hollow microsphere is not particularly limited, but can be selected, for example, from 1 to 500 micrometer (preferably 5 to 200 micrometer, and more preferably 10 to 100 micrometer).

The hollow microsphere may be a hollow inorganic microsphere or a hollow organic microsphere. Of the hollow microspheres, specific examples of the hollow inorganic microsphere include, for example: hollow balloons made of glass, such as a hollow glass balloon; those made of metallic compounds, such as a hollow alumina balloon; and those made of porcelain, such as a hollow ceramic balloon, etc. Examples of the hollow organic microsphere include, for example, hollow balloons made of resins, such as a hollow acrylic balloon and hollow vinylidene chloride balloon.

The specific gravity of the hollow microsphere is not particularly limited, but can be selected, for example, from 0.1 to 0.8 g/cm³ (preferably 0.12 to 0.5 g/cm³). If the specific gravity of a hollow microsphere is smaller than 0.1 g/cm³, lift becomes large when the hollow microspheres are blended and mixed into the pressure-sensitive adhesive composition, and hence it becomes difficult to uniformly disperse the hollow microspheres. On the other hand, if the specific gravity thereof is larger than 0.8 g/cm³, the hollow microsphere becomes expensive, which leads to increased cost.

In addition, various surface treatments (e.g., a low surface tension treatment with a silicone compound, fluorine compound, or the like) may be performed on the surface of the hollow microsphere.

The use amount of the hollow microsphere is not particularly limited, but can be selected, for example, from 10 to 50% by volume, and preferably from 15 to 40% by volume, based on the whole volume of the pressure-sensitive adhesive layer 20 formed by the pressure-sensitive adhesive composition. If the use amount of the hollow microsphere is less than 10% by volume based on the whole volume of the pressure-sensitive adhesive layer 20 formed by the pressure-sensitive adhesive composition, the effect of adding the hollow microsphere becomes low. On the other hand, if the use amount thereof is more than 50% by volume, the adhesiveness by the pressure-sensitive adhesive layer 20 is decreased.

### (Other Components)

In the pressure-sensitive adhesive composition according to the present embodiment, appropriate additives may be included in accordance with the application of the pressure-sensitive adhesive composition, in addition to the aforementioned components (base polymer, surfactant, bubble, hollow microsphere, polymerization initiator, etc.). The pressure-sensitive adhesive composition may include appropriate additives, such as a cross-linking agent (e.g., a polyisocyanate cross-linking agent, silicone cross-linking agent, epoxy cross-linking agent, and alkyl-etherified melamine cross-linking agent, etc.), tackifier (a solid, semi-solid, or liquid tackifier at normal temperature selected from the group consisting of, for example, a rosin derivative resin, polyterpene resin, petroleum resin, and oil soluble phenol resin, etc.), plasticizer, filler, anti-aging agent, antioxidant, colorant (pigment, dye, etc.), and surfactant other than the aforementioned one containing the polymer, etc. When the pressure-sensitive adhesive layer 20 is formed by using, for example, a photo-polymerization initiator, pigment (colored pigment), in an amount to an extent not to hamper a photopolymerization reaction, can be used to color the pressure-sensitive adhesive layer 20. When black is desired as the color of the pressure-sensitive adhesive layer 20, for example, carbon black can be used. From both the viewpoints of the degree of coloration and not hampering a photopolymerization reaction, it is desirable that the use amount of the carbon black to be used as colored pigment is selected, for example, from 0.001 to 0.15 parts by mass, and preferably from 0.02 to 0.1 parts by mass, based on 100 parts by mass of the whole monomer components for forming the base polymer in the pressure-sensitive adhesive composition [in particular, the whole monomer components for forming an acrylic polymer whose monomer major component is a (meth) acrylic acid ester].

A surfactant other than the aforementioned one containing the polymer is not particularly limited, but various polyalkylene glycols, such as polyethylene glycol, polypropylene glycol, and polyethylene glycol/polypropylene glycol copolymer, can be used. By adding these polyalkylene glycols, the adhesion degree and frictional resistance between the hollow microsphere and the base polymer in the bubble-containing pressure-sensitive adhesive layer are reduced, thereby allowing stress dispersibility to be exerted. Accordingly, high adhesiveness can be obtained when the pressure-sensitive adhesive layer is formed by using the bubble-containing pressure-sensitive adhesive composition of the present embodiment.

In the present embodiment, in order to stably mix and place the bubble 24 in the pressure-sensitive adhesive composition, it is desirable to blend and mix the bubble 24 as the last component to be blended into the pressure-sensitive adhesive composition. It is particularly desirable to increase the viscosity of the pressure-sensitive adhesive composition prior to the blending of the bubble (which is sometimes referred to as a "precursor of the pressure-sensitive adhesive composition"). The viscosity of the precursor of the pressure-sensitive adhesive composition is not particularly limited, as far as the bubble to be mixed can be stably held. The viscosity thereof is preferably within a range of 5 to 50 Pa*s, and more preferably within a range of 10 to 40 Pa*s, the viscosity being measured, for example, by using a BH viscometer as a viscometer and under the conditions of a rotor: No. 5 rotor, the number of rotations: 10 rpm, and measurement temperature: 30°C. If the viscosity (BH viscosity meter, No.5 rotor, 10 rpm, 30°C) of the precursor of the pressure-sensitive adhesive composition is less than 5 Pa*s, the viscosity is too low, and hence the mixed bubbles may be united with each other immediately and come out of the system. On the other hand, if the viscosity thereof is more than 50 Pa*s, the viscosity is too high, and hence it becomes difficult to form the pressure-sensitive adhesive layer 20.

The viscosity of the precursor of the pressure-sensitive adhesive composition can be adjusted, for example: by a method of blending various polymer components, such as acrylic rubber and thickening additive; by a method of partially polymerizing the monomer components for forming the base polymer [e.g. , monomer components, such as a (meth)acrylic acid ester for forming the acrylic polymer]; or the like. Specifically, a monomer mixture is prepared by mixing monomer components for forming the base polymer [e.g., monomer components, such as a (meth)acrylic acid ester for forming the acrylic polymer] with a polymerization initiator (e.g., a photo-polymerization initiator, etc.). After a composition (syrup), in which only part of the monomer component is polymerized, is prepared by performing, on the monomer mixture, a polymerization reaction in accordance with the type of the polymerization initiator, the aforementioned surfactant including the polymer and, if necessary, hollow microspheres and various additives are blended into the syrup, so that the precursor of the pressure-sensitive adhesive composition having a moderate viscosity, in which the bubble 24 can be stably contained, can be prepared. The pressure-sensitive adhesive composition stably including the bubble 24 can be obtained by introducing and mixing the bubble 24 into the precursor of the pressure-sensitive adhesive composition. Alternatively, in preparing the syrup, the aforementioned surfactant including the polymer, and the hollow microspheres and various additives that are used if necessary, may be appropriately blended into the monomer mixture in advance.

The method of mixing the bubbles is not particularly limited, but a publicly-known bubble mixing method can be adopted. For example, an example of such an apparatus is provided with: a stator having many fine teeth placed on a disc with a through-hole at its center; and a rotor having teeth as fine as those of the stator, which is placed on the disc to face the stator. A pressure-sensitive adhesive composition, in which a bubble-forming gas is finely dispersed and mixed into the precursor of the pressure-sensitive adhesive composition, can be obtained by introducing the precursor thereof between the teeth on the stator and those on the rotor in the apparatus and then by introducing a gas component (bubble-forming gas) for forming bubbles into the precursor thereof via the through-hole while the rotor is being rotated at high speed.

In order to suppress or prevent the bubbles 24 from being united with each other, it is desirable to continuously perform the steps between the mixing of the bubbles 24 and the formation of the pressure-sensitive adhesive layer 20 as a series of steps. That is, it is preferable that, after the pressure-sensitive adhesive composition is prepared by mixing the bubbles 24 as stated above, the pressure-sensitive adhesive layer 20 is then formed by using the pressure-sensitive adhesive composition and a publicly-known method of forming the pressure-sensitive adhesive layer 20.

Because such a pressure-sensitive adhesive composition hardly causes the union of the bubbles 24 and stably contains a sufficient amount of bubbles, the pressure-sensitive adhesive composition can be preferably used as the pressure-sensitive adhesive composition including the bubble 24, used for forming the pressure-sensitive adhesive layer 20 in the pressure-sensitive adhesive sheet 10, by appropriately selecting the base polymer and additives that form the pressure-sensitive adhesive composition.

As stated above, the pressure-sensitive adhesive layer 20 formed by the pressure-sensitive adhesive composition can be formed by using the pressure-sensitive adhesive composition and a publicly-known method of forming a pressure-sensitive adhesive layer. For example, the pressure-sensitive adhesive layer 20 can be formed by applying the pressure-sensitive adhesive composition onto a predetermined surface, and then by drying and curing the applied composition, etc., if necessary. In forming the pressure-sensitive adhesive layer 20, it is preferable to cure the pressure-sensitive adhesive composition by using heat or radiation of activated energy beams, as stated above. That is, the pressure-sensitive adhesive layer 20 can be preferably formed: by applying the pressure-sensitive adhesive composition including a polymerization initiator, such as a thermal polymerization initiator, photo-polymerization initiator, or the like, onto a predetermined surface; and then by curing, in a state where the bubbles 24 are being stably held, the composition by using heat or radiation of activated energy beams.

The thickness of the pressure-sensitive adhesive layer 20 is not particularly limited, but can be selected, for example, from 200 to 5000 micrometer, preferably 300 to 4000 micrometer, and more preferably 400 to 3000 micrometer. If the thickness of the pressure-sensitive adhesive layer 20 is smaller than 200 micrometer, a cushioning property is deteriorated, thereby causing the adhesiveness to a curved or concave-convex surface to be deteriorated. On the other hand, if the thickness thereof is larger than 5000 micrometer, it becomes difficult to obtain a layer or the pressure-sensitive adhesive sheet 10, which has a uniform thickness.

The pressure-sensitive adhesive layer 20 may have the form of a single layer or multi-layers.

### [Separator]

In the present embodiment, a separator (release liner) may be used in order to protect the adhesive surface (pressure-sensitive adhesive surface) of the pressure-sensitive adhesive layer 20 or of a surface layer when provided. The separator may not be necessarily provided. The separator is released when the adhesive surface protected by the separator is used (i.e., an adherend is attached to the pressure-sensitive adhesive layer 20 or the surface layer protected by the separator).

As such a separator, commonly-used release paper, etc., can be used. Specifically, for example, a substrate having a release-treated layer, which is treated with a release agent, on at least one surface thereof; a substrate having low adhesiveness made of a fluorine polymer (e.g., polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer, or the like); a substrate having low adhesiveness made of a non-polar polymer (e.g., an olefin resin, such as polyethylene, polypropylene, or the like); or the like can be used. Alternatively, the separator can also be used as a substrate for supporting the pressure-sensitive adhesive layer 20.

As the separator, for example, a separator in which a release-treated layer is formed on at least one surface of a release liner substrate can be used preferably. Examples of such a release liner substrate include: plastic substrate films (synthetic resin films), such as a polyester film (polyethylene terephthalate film, or the like), olefin resin film (polyethylene film, polypropylene film, or the like), polyvinylchloride film, polyimide film, polyamide film (nylon film), and rayon film; paper (high-quality paper, Japanese paper, craft paper, glassine paper, synthetic paper, and topcoat paper, etc.); and those obtained by multi-layering the above films or paper (composite bodies having 2 to 3 layers) with the use of lamination, co-extrusion, or the like.

On the other hand, the release agent for forming the release-treated layer is not particularly limited, but, for example, a silicone release agent, fluorine release agent, long-chain alkyl release agent, or the like can be used. The release agents can be used alone or in combination of two or more thereof.

The thickness and a forming method of the separator are not particularly limited.

The pressure-sensitive adhesive sheet 10 may be formed in a form of being wound into a rolled shape or formed in a form of being laminated. That is, the pressure-sensitive adhesive sheet 10 according to the present embodiment can have a sheet-shaped form, tape-shaped form, or the like. When the pressure-sensitive adhesive sheet 10 has a form of being wound into a rolled shape, the sheet 10 can be produced, for example, by winding the sheet 10 into a rolled-shape in a state where the pressure-sensitive adhesive layer 20 is being protected by the release-treated layer formed on the rear side of the separator or the substrate.

Because the pressure-sensitive adhesive sheet 10 according to the present embodiment has the pressure-sensitive adhesive layer 20 including a sufficient amount of the bubbles 24, good adhesiveness can be exerted to a curved or concave-convex surface, and excellent resistance to resilience can be exerted. Accordingly, the pressure-sensitive adhesive sheet 10 can be preferably used as a pressure-sensitive adhesive sheet to be attached to a curved or concave-convex surface, and as a pressure-sensitive adhesive sheet to be used in applications in which resistance to resilience is required.

Further, in the pressure-sensitive adhesive sheet 10 according to the present embodiment, by using, as a component of the pressure-sensitive adhesive composition, the surfactant including a polymer formed from both a fluorine monomer and a non-fluorine ethylenically polymerizable monomer whose homopolymer, when formed, has a glass transition temperature of 60°C or higher, it can be made that a pinhole penetrating the pressure-sensitive adhesive layer 20 in the thickness direction is hardly caused, when the thickness of the layer 20 is small, even when the thickness is, for example, 400 micrometer or less. Thereby, the pressure-sensitive adhesive sheet 10 of a thin type can be provided without the appearance thereof being impaired. Further, because the use amount of the fluorine monomer to form the polymer included in the surfactant, which is said to be generally expensive, can be reduced, the cost of the pressure-sensitive adhesive sheet 10 having the aforementioned advantages can be reduced.

Although the pressure-sensitive adhesive sheet 10 described above has the pressure-sensitive adhesive layer 20 as a major component, the aspect of the sheet 10 is not limited thereto.

For example, a pressure-sensitive adhesive layer (surface layer) not including a bubble may be laminated on one or both of the major surfaces of the pressure-sensitive adhesive layer 20 (Aspect 1). The surface layer can be formed by using both a publicly-known pressure-sensitive adhesive (e.g., an acrylic pressure-sensitive adhesive, rubber pressure-sensitive adhesive, vinyl alkyl ether pressure-sensitive adhesive, silicone pressure-sensitive adhesive, polyester pressure-sensitive adhesive, polyamide pressure-sensitive adhesive, urethane pressure-sensitive adhesive, fluorine pressure-sensitive adhesive, epoxy pressure-sensitive adhesive, or the like) and a publicly-known method of forming a pressure-sensitive adhesive layer. The thickness of the surface layer is not particularly limited, but can be appropriately selected in accordance with the purpose and application of the pressure-sensitive adhesive sheet.

Alternatively, the pressure-sensitive adhesive sheet may have a structure in which the pressure-sensitive adhesive layer 20 is laminated on one or both of the major surfaces of the substrate (Aspect 2). In this case, an appropriate thin body can be used as the substrate. Examples of the thin body include, for example: a paper substrate, such as paper; a fiber substrate, such as cloth, non-woven cloth, net, or the like; a metal substrate, such as a metal foil, metal plate, or the like; a plastic substrate, such as a plastic film or sheet; a rubber substrate, such as a rubber sheet; a foam, such as a foam sheet; or a laminated body of these substrates (in particular, a laminated body of a plastic substrate and another substrate, that of both plastic films (or sheets), or the like). As the substrate, a plastic substrate, such as a plastic film, plastic sheet, or the like, can be used preferably. Examples of the material of such a plastic film or plastic sheet include, for example olefin resins whose monomer component is an α-olefin, such as polyethylene (PE), polypropylene (PP), ethylene-propylene copolymer, and ethylene-vinylacetate copolymer (EVA) ; polyester resins, such as polyethylene terephthalate (PET), polyethylenenaphthalate (PEN), and polybutylene terephthalate (PBT); polyvinyl chloride (PVC); vinyl acetate resins; polyphenylene sulfides (PPS); amide resins, such as polyamide (nylon), wholly aromatic polyamide (aramid); polyimide resins; and polyether ether ketone (PEEK), etc. These materials can be used alone or in combination of two or more thereof.

When a plastic substrate is used as the substrate, a deformation property, such as a coefficient of extension, may be controlled by extension processing, etc. When the pressure-sensitive adhesive layer 20 is formed by being cured with the use of activated energy beams, it is preferable to use a substrate that does not hamper the transmission of the activated energy beams as the substrate.

The thickness of the substrate can be appropriately selected in accordance with the strength, flexibility, and purpose of use, etc. For example, the thickness thereof is generally 1000 micrometer or less, for example, 1 to 1000 micrometer, preferably 1 to 500 micrometer, and more preferably approximately 3 to 300 micrometer, but is not particularly limited thereto. The substrate may have a single layer form or a laminated form.

Alternatively, the substrate may have a structure in which the aforementioned Aspect 1 and Aspect 2 are appropriately combined together.

### Examples

Hereinafter, the present invention will be described in more detail based on Examples, but the invention should not be limited at all by these Examples.

The components and contents of the pressure-sensitive adhesive composition used for the production of each of Examples and Comparative Examples are shown in Table 2.

### (Example 1)

After 0.04 parts by mass of a photo-polymerization initiator (product name: "IRGACURE 651", made by BASF) was blended and mixed into a monomer mixture in which 90 parts by mass of 2-ethylhexyl acrylate and 10 parts by mass of an acrylic acid had been mixed together as monomer components, the mixture was irradiated with ultraviolet (UV) rays before the viscosity thereof (BH viscometer, No. 5 rotor, 10 rpm, measurement temperature: 30°C) became approximately 15 Pa*s to produce a composition (syrup) in which part of the monomer components were polymerized. Subsequently, 0.50 parts by mass (solid conversion) of a surfactant 1 (product name: "F-562" , made by DIC Corporation), 0.07 parts by mass of a cross-linking agent (product name: "A-HD-N", made by SHIN-NAKAMURA CHEMICAL Co., Ltd.), 9.0 parts by mass of glass balloons (product name: "Sphericel 25P45", made by Potters Ballotini), 0.5 parts by mass of an antioxidant (product name: "IRGANOX 1010", made by BASF), 0.02 parts by mass of pigment (product name: "AT-DN black", made by Dainichiseika Color & Chemicals Mfg. Co., Ltd.), and 1.5 parts by mass of 2-ethylhexyl acrylate (2EHA), as a pigment diluent monomer, were mixed into the partially-polymerized monomer syrup, so that a precursor of pressure-sensitive adhesive composition (sometimes referred to as a "precursor A of pressure-sensitive adhesive composition") was produced.

After the precursor A of pressure-sensitive adhesive composition was put into a beaker, 20% by volume of nitrogen gas was introduced into the precursor A by bubbling the gas from the bottom of the precursor A. During the introduction, a pressure-sensitive adhesive composition containing bubbles (sometimes referred to as a "pressure-sensitive adhesive composition A") was obtained by mixing the bubbles into the precursor A with a homomixer being driven so as to bite the bubbles.

After the pressure-sensitive adhesive composition A was applied on a release-treated surface of a substrate made of polyethylene terephthalate, so that the thickness of the composition A was 0.8 mm after being dried and cured, a substrate made of polyethylene terephthalate whose one surface had been subjected to a release treatment was attached onto the composition A such that the release-treated surfaces contacted the composition A. The pressure-sensitive adhesive composition A was irradiated with UV rays having an illuminance of approximately 4.0 mW/cm² for 10 minutes to be cured, so that a pressure-sensitive adhesive sheet having a pressure-sensitive adhesive layer formed by the pressure-sensitive adhesive composition A was produced. Herein, the surfactant 1 contains 17% by mole of methacrylate including a tridecafluoro hexyl group and an urethane bond, as a fluorine monomer structural unit, and 56% by mole of methyl methacrylate (Tg: 105°C) and 24% by mole of dicyclopentanyl methacrylate (Tg: 175°C), as non-fluorine ethylenically polymerizable monomer structural units. Mw of the surfactant 1 was 25200, Mn thereof was 4010, and Mw/Mn was 6.28.

### (Example 2)

A precursor of pressure-sensitive adhesive composition (sometimes referred to as a "precursor B of pressure-sensitive adhesive composition") was produced in the same way as in Example 1, except that 0.60 parts by mass (solid conversion) of a surfactant 2 (which includes 23% by mole of the fluorine monomer structural unit and 67% by mole of isobornyl methacrylate (Tg: 173°C)) ,as non-fluorine ethylenically polymerizable monomer structural units, were used and that 0.18 parts by mass of 2-EHA were used as a diluent monomer.

A pressure-sensitive adhesive composition (sometimes referred to as a "pressure-sensitive adhesive composition B") was obtained in the same way as in Example 1, except that the precursor B of pressure-sensitive adhesive composition was used. Further, a pressure-sensitive adhesive sheet was produced in the same way as in Example 1, except that the pressure-sensitive adhesive composition B was used.

### (Comparative Example 1)

A precursor of pressure-sensitive adhesive composition (sometimes referred to as a "precursor C of pressure-sensitive adhesive composition") was produced in the same way as in Example 1, except that 0.60 parts by mass (solid conversion) of a surfactant 3 (product name: "Surflon S-393", made by AGC SEIMI CHEMICAL CO. , LTD.) were used and that 0.6 parts by mass of 2-EHA were used as a diluent monomer.

A pressure-sensitive adhesive composition (sometimes referred to as a "pressure-sensitive adhesive composition C") was obtained in the same way as in Example 1, except that the precursor C of pressure-sensitive adhesive composition was used. Further, a pressure-sensitive adhesive sheet was produced in the same way as in Example 1, except that the pressure-sensitive adhesive composition C was used. Herein, the surfactant 3 includes 22% by mole of perfluoroalkyl ethyl acrylate, as a fluorine monomer structural unit, and 34% by mole of 2-ethylhexyl methacrylate (Tg:-10°C) and 11% by mole of 2-hydroxyethyl methacrylate (Tg: 55°C), as non-fluorine ethylenically polymerizable monomer structural units; and does not include, as a non-fluorine ethylenically polymerizable monomer structural unit, a monomer whose Tg is 60°C or higher. Mw of the surfactant 3 was 7920, Mn thereof was 4460, and Mw/Mn was 1.78.

### (Comparative Example 2)

A precursor of pressure-sensitive adhesive composition (sometimes referred to as a "precursor D of pressure-sensitive adhesive composition") was produced in the same way as in Example 1, except that 0.30 parts by mass (solid conversion) of a surfactant 4 (which includes 18% by mole of a fluorine monomer structural unit and does not include, as a non-fluorine ethylenically polymerizable monomer structural unit, a monomer whose Tg is 60°C or higher) were used and that 0.3 parts by mass of 2-EHA were used as a diluent monomer.

A pressure-sensitive adhesive composition (sometimes referred to as a "pressure-sensitive adhesive composition D") was obtained in the same way as in Example 1, except that the precursor D of pressure-sensitive adhesive composition was used. Further, a pressure-sensitive adhesive sheet was produced in the same way as in Example 1, except that the pressure-sensitive adhesive composition D was used.

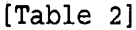

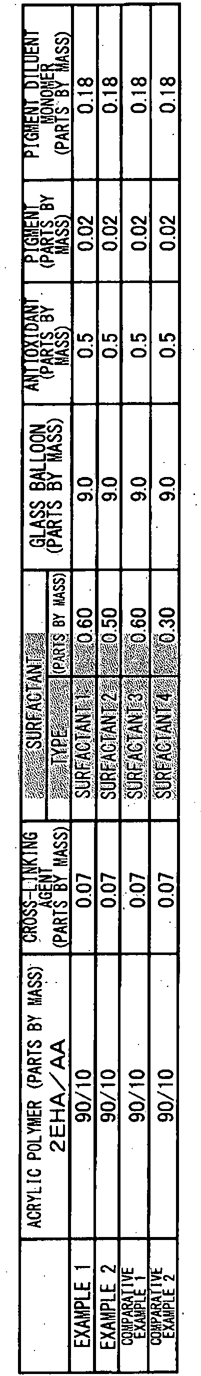

### (Pinhole Evaluation)

In each of the pressure-sensitive adhesive sheets of Examples 1 and 2 and Comparative Examples 1 and 2, a situation in which pinholes were generated was evaluated by the following procedures. The results obtained with respect to a pinhole are shown in Table 3.

### [Pinhole]

A pinhole is meant to be a structure in which, as a result that a bubble having a size larger than or equal to a predetermined one is present in the pressure-sensitive adhesive layer, when light is radiated onto a pressure-sensitive adhesive layer from one surface of the layer in a state of not being laminated with a substrate, the amount of transmitted light on the other surface of the layer is more than a predetermined threshold value. The predetermined threshold value will be described later. A structure in which a through-hole is formed in the pressure-sensitive adhesive layer in the pressure-sensitive adhesive sheet is also encompassed by the pinhole. As the diameter of the bubble is larger in the pinhole, a larger amount of light is likely to be transmitted; and the pinholes are sorted out into three categories of a small pinhole, a middle pinhole, and a large pinhole, based on the transmissibility of light.

In the measurement of a pinhole, light is first radiated onto the pressure-sensitive adhesive layer that has been subjected to UV polymerization, from one surface of the layer by using a halogen lamp (JCR15V150W5H/5), and the transmission of the light is photographed on the other surface of the layer. Subsequently, assuming that a region where the transmission of light is observed on a photographed image is a pinhole, the area of the pinhole is calculated by using VISION POINT VP-L1000 (made by HAGA ELECTRIC Ltd.) based on the pixel data in the region. Subsequently, the light transmitted area is converted into a true circle such that the diameter of the true circle is calculated, the diameter being considered to be the diameter of the pinhole (a pinhole is assumed to be approximately spherical). That is, even with respect to a pinhole formed by a bubble having a distorted shape in which multiple small bubbles are coagulated, the pinhole is assumed to have a truly circular shape for the evaluation.

When the thickness of the pressure-sensitive adhesive layer is 0.4 to 2.0 mm, a region having a diameter of 0.25 mm or more is made to be a pinhole region. In this case, the small pinhole is defined as a pinhole having a diameter (D) of 0.25 mm ≤ D < 0.8 mm. The middle pinhole is defined as a pinhole having a diameter (D) of 0.8 mm ≤ D < 1.5 mm. The large pinhole is defined as a pinhole having a diameter (D) of 1.5 mm ≤ D.

**[Table 3]**

| | PINHOLE [NUMBER OF PIECES/m²] | | |
|---|---|---|---|
| | LARGE PINHOLE | MIDDLE PINHOLE | SMALL PINHOLE |
| EXAMPLE 1 | 0.00 | 0.01 | 0.02 |
| EXAMPLE 2 | 0.00 | 0.00 | 0.35 |
| COMPARATIVE EXAMPLE 1 | 0.09 | 16.62 | 354.47 |
| COMPARATIVE EXAMPLE 2 | 0.52 | 66.98 | 1024.72 |

## Claims

1. A pressure-sensitive adhesive composition comprising:
a pressure-sensitive adhesive composite;
a bubble; and
a surfactant including a polymer that has a cyclic structure and a fluorinated hydrocarbon group in its molecule.

2. The pressure-sensitive adhesive composition according to claim 1, wherein
the polymer contains, as a copolymerization component, one or more selected from the group consisting of ethylene glycol and propylene glycol.

3. The pressure-sensitive adhesive composition according to claim 1 or 2, wherein
a weight average molecular weight of the polymer is 20000 or more.

4. The pressure-sensitive adhesive composition according to any one of claims 1 to 3, wherein
a content of the surfactant is 0.01 to 2 parts by mass based on 100 parts by mass of a base polymer in the pressure-sensitive adhesive composition.

5. The pressure-sensitive adhesive composition according to any one of claims 1 to 4 comprising, as the pressure-sensitive adhesive composite, an acrylic polymer whose monomer major component is a (meth)acrylic acid ester.

6. The pressure-sensitive adhesive composition according to any one of claims 1 to 5 further comprising a hollow microsphere.

7. The pressure-sensitive adhesive composition according to claim 6, wherein
the hollow microsphere is a hollow glass balloon.

8. The pressure-sensitive adhesive composition according to any one of claims 1 to 7 that can be cured by an activated energy beam.

9. A pressure-sensitive adhesive sheet having a pressure-sensitive adhesive layer formed by the pressure-sensitive adhesive composition according to any one of claims 1 to 8.

## Patentansprüche

1. Haftkleberzusammensetzung umfassend:
einen Haftkleberverbundstoff;
eine Blase; und
einen oberflächenaktiven Stoff, der ein Polymer einschließt, welches eine cyclische Struktur und eine fluorierte Kohlenwasserstoffgruppe in seinem Molekül aufweist.

2. Haftkleberzusammensetzung nach Anspruch 1, wobei das Polymer als eine Copolymerisationskomponente eine oder mehrere Verbindungen, ausgewählt aus der Gruppe bestehend aus Ethylenglycol und Propylenglycol, enthält.

3. Haftkleberzusammensetzung nach Anspruch 1 oder 2, wobei ein Gewichtsmittel des Molekulargewichts des Polymers 20000 oder mehr beträgt.

4. Haftkleberzusammensetzung nach einem der Ansprüche 1 bis 3, wobei ein Gehalt des oberflächenaktiven Stoffes 0,01 bis 2 Massenteile, bezogen auf 100 Massenteile eines Grundpolymers in der Haftkleberzusammensetzung, beträgt.

5. Haftkleberzusammensetzung nach einem der Ansprüche 1 bis 4 umfassend, als den Haftkleberverbundstoff, ein Acrylpolymer, dessen Monomerhauptkomponente ein (Meth)acrylsäureester ist.

6. Haftkleberzusammensetzung nach einem der Ansprüche 1 bis 5, außerdem umfassend eine hohle Mikrokugel.

7. Haftkleberzusammensetzung nach Anspruch 6, wobei die hohle Mikrokugel ein hohler Glasballon ist.

8. Haftkleberzusammensetzung nach einem der Ansprüche 1 bis 7, welche durch einen aktivierten Energiestrahl gehärtet werden kann.

9. Haftklebefolie mit einer Haftkleberschicht, die durch die Haftkleberzusammensetzung nach einem der Ansprüche 1 bis 8 gebildet wird.

## Revendications

1. Composition d'adhésif autocollant comprenant :
un composite adhésif autocollant ;
une bulle ; et
un tensioactif comprenant un polymère qui a une structure cyclique et un groupe hydrocarboné fluoré dans sa molécule.

2. Composition d'adhésif autocollant selon la revendication 1, dans laquelle
le polymère contient, en tant que composant de copolymérisation, l'un ou plusieurs choisis dans le groupe constitué de l'éthylène glycol et du propylène glycol.

3. Composition d'adhésif autocollant selon la revendication 1 ou 2, dans laquelle
le poids moléculaire moyen en poids du polymère est de 20000 ou plus.

4. Composition d'adhésif autocollant selon l'une quelconque des revendications 1 à 3, dans laquelle
la teneur du tensioactif est de 0,01 à 2 parties en masse sur la base de 100 parties en masse d'un polymère de base dans la composition d'adhésif autocollant.

5. Composition d'adhésif autocollant selon l'une quelconque des revendications 1 à 4 comprenant, en tant que composite adhésif autocollant, un polymère acrylique dont le composant monomère majeur est un ester d'acide (méth)acrylique.

6. Composition d'adhésif autocollant selon l'une quelconque des revendications 1 à 5, comprenant en outre une microsphère creuse.

7. Composition d'adhésif autocollant selon la revendication 6, dans laquelle
la microsphère creuse est un ballonnet en verre creux.

8. Composition d'adhésif autocollant selon l'une quelconque des revendications 1 à 7 qui peut être durcie par un faisceau d'énergie activé.

9. Feuille d'adhésif autocollant ayant une couche d'adhésif autocollant formée par la composition d'adhésif autocollant selon l'une quelconque des revendications 1 à 8.
